# EUROPEAN PATENT APPLICATION

(11) **EP 2 995 567 A1**
(43) Date of publication of application: **16.03.2016**
(21) Application number: 15184503.9
(22) Date of filing: 09.09.2015
(51) Int. Cl.: B65C 3/06, B65G 21/20, B65C 9/02

(54) **SLEEVING SYSTEM**

(30) Priority: 09.09.2014 NL 2013446
(71) Applicant: Fuji Seal International, Inc., Osaka-shi, Osaka 532-0003 (JP)
(72) Inventor: Hofstede, Jeroen Bernardus, 5931 JJ Tegelen (NL); Koolhaas, Ernst Christiaan, 5673 TT Nuenen (NL)
(74) Representative: Jacobs, Bart

(57) **Abstract**

The present invention relates to a sleeving system. More in particular, it relates to a sleeving system that allows a sleeve (111) or label to be arranged around a container (100) in which foodstuff or beverages are contained or are to be contained. The sleeves (111) or labels around the container may for instance indicate the contents of the container (100).

The system accordance to the present invention uses a movable vacuum conveyor belt (10), which is provided with a plurality of through openings (22). A vacuum unit (6) having a primary vacuum chamber (12) and a plurality of secondary vacuum chambers (17A, 17B) applies a vacuum to at least one of the through openings (22) as the conveyor belt (10) moves along the vacuum unit (6). This allows containers (100) to be transported suspended from the conveyor belt (6) and in an upright position, thereby facilitating the placement of sleeves (111).

## Description

The present invention relates to a sleeving system. More in particular, it relates to a sleeving system that allows a sleeve or label to be arranged around a container in which foodstuff or beverages are contained or are to be contained. The sleeves or labels around the container may for instance indicate the contents of the container.

Sleeving systems are known in the art. These systems typically comprise a transport system with a conveyor having a conveyor belt on which the containers are transported in an upright position. A sleeving device may be used to arrange a sleeve or other label around the container, preferably during continuous or intermittent motion of the container. As the containers are in the upright position, the sleeves or labels are placed around the containers from above or from the side. The sleeves can be made from heat-shrinkable material, wherein by applying heat, the sleeves can be fixedly attached to the containers.

Most containers have a tapered shape in which the bottom of the container is less wide than the top of the container. This tapered shape is a result of the process by which the containers are formed, e.g. thermoforming. Form-fill-seal systems are known in which a container is first formed from a heated thermoplastic, after which the formed container is filled with a beverage or foodstuff. As a final step, a seal is applied to the top of the container for sealing the container.

In case a sleeve is to be applied to the containers described above, it is common practice to flip the containers upside down such that the less wide bottom of the container becomes accessible to allow placement of the sleeves. This particularly holds for assemblies of containers, in which a plurality of containers are coupled at the topside, e.g. an assembly of 4, 6 or more containers holding yoghurt.

However, for some products it is not desirable to flip the container. For instance, the foodstuff contained in the container comes into contact with the seal when the container is flipped upside down. There, it may adhere to the seal to such extent that a small layer of foodstuff will remain attached to seal after the container is flipped back to the upright position. This small layer will deteriorate more rapidly in time, causing inconvenience for a consumer when the container is opened for the first time. The small layer may even result in a more rapid deterioration of the remaining foodstuff in the container.

It is therefore an object of the present invention to provide a sleeving system in which the abovementioned problems do not occur or at least to an acceptable extent. More in particular, it is an object of the present invention to provide a sleeving system that allows a sleeve and/or label to be arranged onto a container while the container is in the upright position.

According to the invention, this object is achieved with the system as defined in claim 1 that is characterized in that the conveyor belt has a plurality of through openings. Furthermore, the transport system comprises a stationary vacuum unit configured to apply a vacuum to at least one of the through openings as the conveyor belt moves along the vacuum unit. The vacuum unit comprises a primary vacuum chamber, and a plurality of secondary vacuum chambers, which during operation, are each configured to abut the movable conveyor belt and which each have an opening elongated in a direction of movement of the conveyor belt to essentially cover at least one through opening in the conveyor belt in order to hold or suck the container against the moving conveyor belt.

The primary vacuum chamber has a larger internal volume than the accumulated volume of the plurality of secondary vacuum chambers. Each secondary vacuum chamber comprises a throttle opening between the internal volume of the primary vacuum chamber and that secondary vacuum chamber to apply the vacuum in the primary vacuum chamber to that secondary vacuum chamber. A size of the throttle opening is substantially less than a length of each elongated opening in the direction of movement.

During operation, some of the through openings will be covered by a container that is held against the conveyor belt, whereas other through openings will not be covered. In addition, some of the through openings may, at a given moment in time during transport, be covered by an elongated opening of a secondary vacuum chamber, whereas other through openings may not be. Consequently, for some through openings, air will leak from the outside through the secondary vacuum chamber towards the primary vacuum chamber.

During high speed transport involving large quantities of containers, a situation which is quite common in the food and beverage industry, it is important that containers are picked up quickly. The speed with which containers are picked up depends on the vacuum level inside the primary vacuum chamber, the flow resistance inside the system, and the pumping power of the vacuum pump that is connected to the primary vacuum chamber. On the other hand, the force with which a container is held against the conveyor belt depends mainly on the vacuum inside the primary vacuum chamber and the area of the through opening(s) in the conveyor belt that is/are covered by the container.

By using a plurality of relatively small secondary vacuum chambers having elongated openings, it can be ensured that each elongated opening covers at least one through opening thereby providing sufficient area to generate the abovementioned force, while at the same time limiting the impact of leakage on the vacuum inside the primary vacuum chamber. If leakage occurs, the pressure in the secondary vacuum chamber will rise quickly. However, this increase is mostly limited to that particular secondary vacuum chamber as the flow through the throttle opening is limited by the dimensions of that opening. On the other hand, if the leakage stops, for instance because the through opening is covered by a container, vacuum can be restored quickly due to the limited internal volume of the secondary vacuum chamber compared to the internal volume of the primary vacuum chamber.

The elongated openings are spaced apart in the direction of movement of the conveyor belt. The number and size of the elongated openings should not prevent the conveyor belt from laying against the vacuum unit in a substantially flat manner. Otherwise, excessive leakage flows may exist in between the conveyor belt and the vacuum unit.

A size of the throttle opening, such as its diameter, may be substantially less than a length of each elongated opening in the direction of movement of the conveyor belt. More in particular, the throttle opening may have a diameter and/or characteristic size between 1.4 mm and 1.8 mm, preferably a diameter of about 1.6 mm.

The transport system may further comprise a rejection unit configured to remove a container from the movable vacuum conveyor belt, the rejection unit comprising a conduit for selectively supplying fluid to at least one of the plurality of secondary vacuum chambers in order to at least partly eliminate the vacuum therein, for instance by quickly increasing the pressure in the secondary vacuum chamber. To that end, the system may comprise a control unit configured to activate the rejection unit to supply fluid to the secondary vacuum chamber(s) associated with the selected conduit. This conduit may exit in the at least one of said plurality of secondary vacuum chambers. More in particular, the conduit may exit in the elongated opening. In these configurations, fluid supplied by the conduit has to pass through the throttle opening in order to reach the primary vacuum chamber. This will ensure that operation of the rejection unit will not affect the vacuum in the primary vacuum chamber too significantly. This again demonstrates the advantageous configuration of the present invention. By introducing the fluid of the rejection unit in a secondary vacuum chamber, separated from the main primary vacuum chamber, wherein both chambers are separated by a throttle opening, vacuum in the secondary vacuum chamber can be quickly restored and can be quickly removed. This is particularly relevant for high speed, high throughput applications found typically in the food and beverage industry.

A support element may be provided for supporting the conduits above or below the at least one of said plurality of secondary vacuum chambers, wherein the support element is configured to allow lateral and/or longitudinal displacement of the conduit in order to position the conduit above or below the at least one of said plurality of secondary vacuum chambers.

The fluid supplied by the rejection unit may comprise a gaseous medium, preferably a compressed gaseous medium, such as compressed air.

The transport system may further comprise a guiding member to guide the movement of the conveyor belt, wherein the guiding member comprises the plurality of secondary vacuum chambers, each secondary vacuum chamber being in fluid communication with the primary vacuum chamber. During operation, the conveyor belt itself will be sucked against the guiding member. This will reduce the leakage into the secondary vacuum chambers from through openings that are not covered by a container and that are not covered by an elongated opening. Ideally, there should be no fluid flow leakage parallel to the guiding member in between the guiding member and conveyor belt. More in particular, during operation, the conveyor belt should abut the guiding plate.

In an embodiment, the vacuum unit may comprise a box member, wherein the guiding member is fixedly connected to the box member to define the primary vacuum chamber, and wherein the guiding member preferably has a plate shape. For instance, the box member could comprise a bottom wall and four side walls extending therefrom. The box member could also be a chamber or space inside a larger volume. The guiding member, acting as a lid member, could be fixedly connected to the four side walls thereby closing a box like internal volume inside the box member. Such internal volume could correspond to the primary vacuum chamber.

The throttle openings can also be incorporated in the guiding member. For example, the guiding member can be embodied as a plate having throttle openings defined on one side of the plate and elongated openings on the other side.

The length of each elongated opening in the direction of movement may be 5 to 10 times larger than a diameter and/or characteristic size of the throttle opening, wherein the length of each elongated opening in the direction of movement is preferably in the range of 7 to 18 mm, preferably about 10 mm.

A diameter and/or characteristic size of the throttle opening may substantially identical to a diameter and/or characteristic size of the through openings in the conveyor belt. By restricting the size of the openings, the flow of fluid can be limited. The impact of leakage on the vacuum in the primary and secondary vacuum chambers can be limited. For instance, in case of very large through openings, significant leakage may occur around the edges of the container when it is held against the conveyor held.

The present invention is particularly advantageous for systems in which, during operation, the container is essentially suspended from the conveyor belt. In these embodiments, the suction force exerted on the container should be sufficient to overcome the force of gravity. Other embodiments, in which the container is standing on top of the conveyor belt, are not excluded.

A length of the elongated opening in the direction of movement of the conveyor belt can be larger than a pitch between consecutive through openings in the conveyor belt. In this case, it is ensured that always at least one through opening is covered by the elongated opening.

Additionally or alternatively, a pitch between consecutive through openings in the conveyor belt may be smaller than a width of the container. Here, the width of the container refers to the size of the container in the direction of movement of the conveyor belt. Preferably, the pitch between consecutive through openings is such that a container is picked up or held using a plurality of through openings.

Additionally or alternatively, a distance between a trailing end of a first secondary vacuum chamber and a leading end of a second secondary chamber may be smaller than a pitch between consecutive through openings in the conveyor belt. This prevents that, during operation, two consecutive through openings in the conveyor belt are both not covered by an elongated opening.

Additionally or alternatively, a size of the elongated openings in a direction transverse to the direction of movement of the conveyor belt may be larger than a size of the through openings in the conveyor belt in the transverse direction. This ensures that a through opening can be fully enclosed by the elongated opening.

Additionally or alternatively, a volume of the primary vacuum chamber may be at least 5 times, preferably at least 10 times, more preferably at least 20 times as large as the accumulated volume of the plurality of secondary vacuum chambers.

The conveyor belt may be an endless conveyor belt that is mounted in a loop around a pair of spaced apart wheels or rollers, wherein the wheels or rollers are configured to drive and guide the conveyor belt and wherein the vacuum unit is disposed in the loop and in between the wheels or rollers. The wheels or rollers and endless conveyor belt may be provided with co-acting engaging structures, such as complementary toothing, to ensure a proper transfer of the rotary motion of the wheels or rollers to a linear motion of the conveyor belt.

The sleeving device may be arranged for arranging heat-shrinkable sleeves around the containers transported by the conveyor.

The vacuum conveyor belt and the vacuum unit may comprise multiple rows of through openings in the vacuum conveyor belt and multiple rows of said secondary chambers, respectively, which rows are arranged in parallel. By using more secondary vacuum chambers and through openings, the available area for generating a suction force is increased.

Next, the invention will be described with reference to the appended drawings, wherein:
Figures 1A-1D illustrate various views of an embodiment of a transport system in accordance with the present invention;
Figure 2 shows a cross sectional view of the vacuum unit in the system of figure 1;
Figures 3A-3E shows various views of the guiding plate of the vacuum unit depicted in figure 2;
Figure 4 illustrates a top view of a part of the conveyor belt of the system depicted in figure 1A;
Figures 5A-5B illustrate cross sections of the vacuum unit depicted in figure 2;
Figure 6 illustrates an embodiment of a sleeving system according to the invention which uses the transport system of figures 1-5; and
Figure 7 illustrates an advantageous shape of a container.

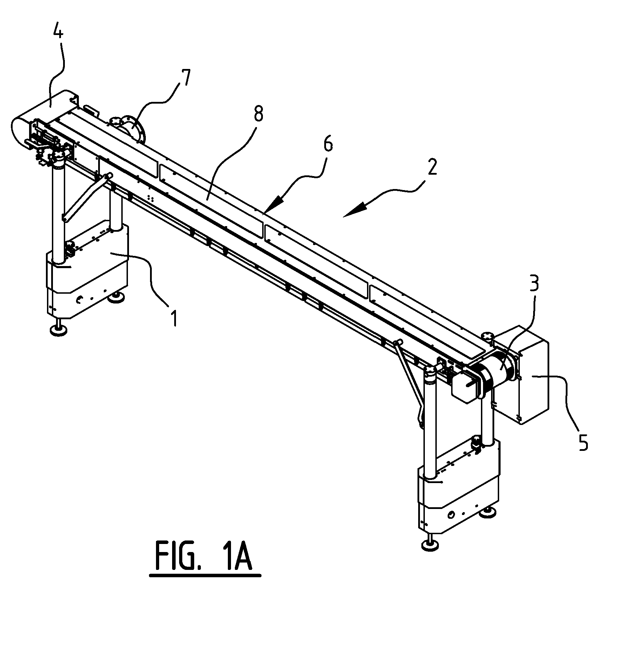

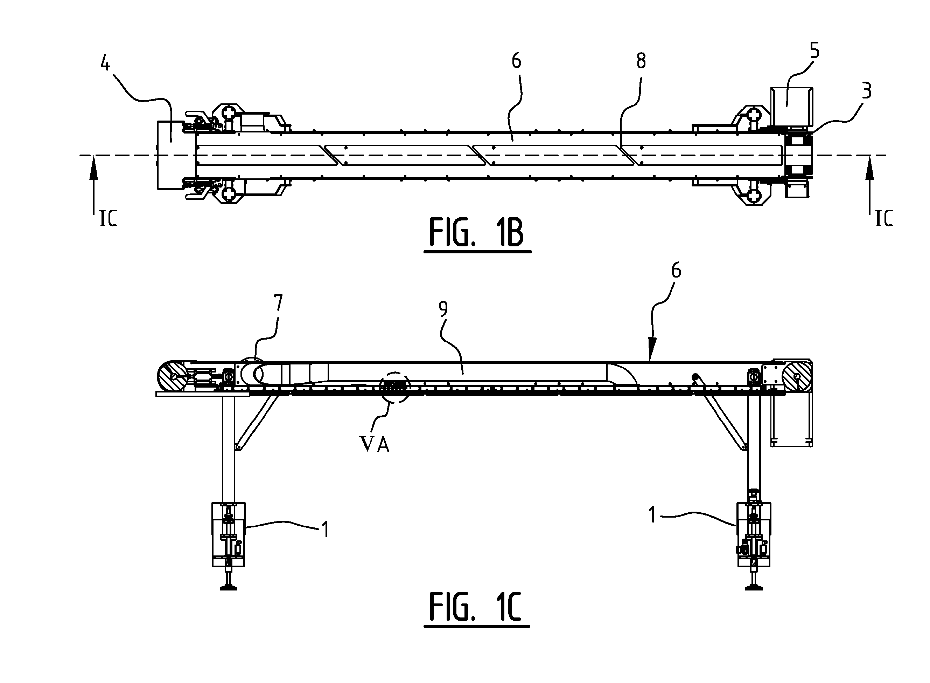

An embodiment of a transport system in accordance with the present invention is illustrated in figures 1A-1D. This system comprises two support units 1 that support a conveyor 2, which conveyor comprises a drive roller/wheel 3 and an idler roller/wheel 4, see figure 1A. An electric motor 5 is used to rotate drive roller/wheel 3. Figure 1A does not illustrate the conveyor belt as a result of which a vacuum unit 6 is visible that extends between rollers/wheels 3, 4. Vacuum unit 6 can be connected to a vacuum pump using inlet 7. On its top surface, as illustrated in the top view of figure 1B, vacuum unit 6 is provided with a guiding structure 8 in the form of a protrusion. Guiding structure 8 will guide the conveyor belt.

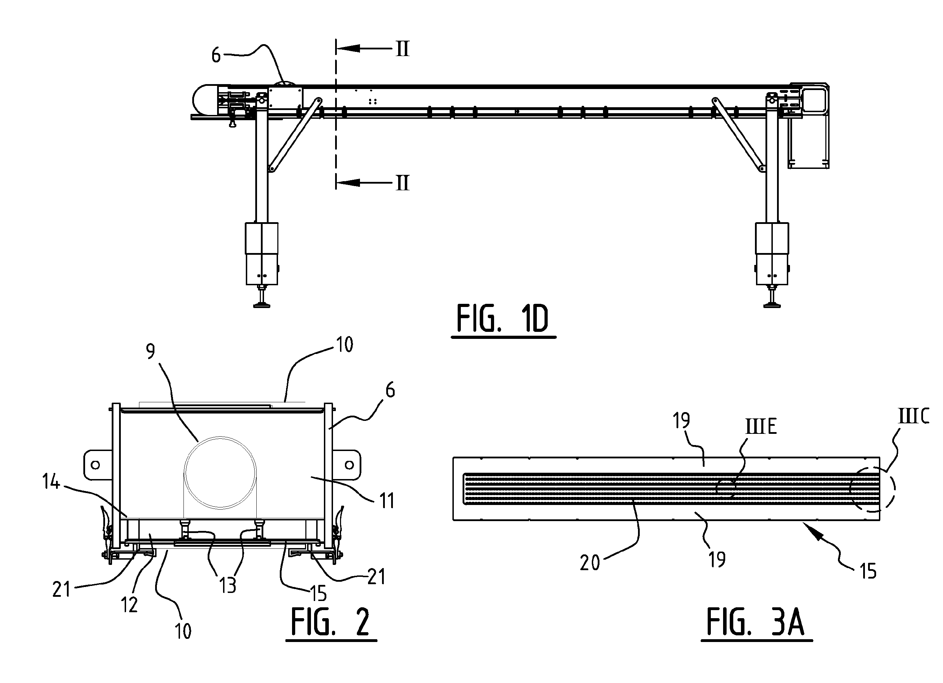

From the cross sectional and side views in figures 1C and 1D, respectively, it can be seen that a vacuum pipe 9 extends within vacuum unit 6 that is connected to inlet 7. It further shows details of the support units 1, with which the height of the conveyor can be adjusted in a known manner.

The cross sectional view illustrated in figure 2 shows the inside of vacuum unit 6. This view also illustrates a conveyor belt 10 that is mounted around rollers/wheels 3, 4.

The inside of vacuum unit 6 is divided into two chambers, a construction chamber 11 in which vacuum pipe 9 extends, and a primary vacuum chamber 12. Distance pins 13 support a separation plate 14 that divides vacuum unit 6 in these chambers. Vacuum unit 6 may comprise a plurality of primary vacuum chambers 12 and constructions chambers 11 that are each individually connected to vacuum pipe 9.

Primary vacuum chamber 12 is in fluid communication with vacuum pipe 9 such that during operation a pressure of about 130 mbar is generated. Primary vacuum chamber 12 is not, or only to a very limited extent, in fluid communication with construction chamber 11. Hence, the vacuum pump (not illustrated) is not configured to evacuate construction chamber 11.

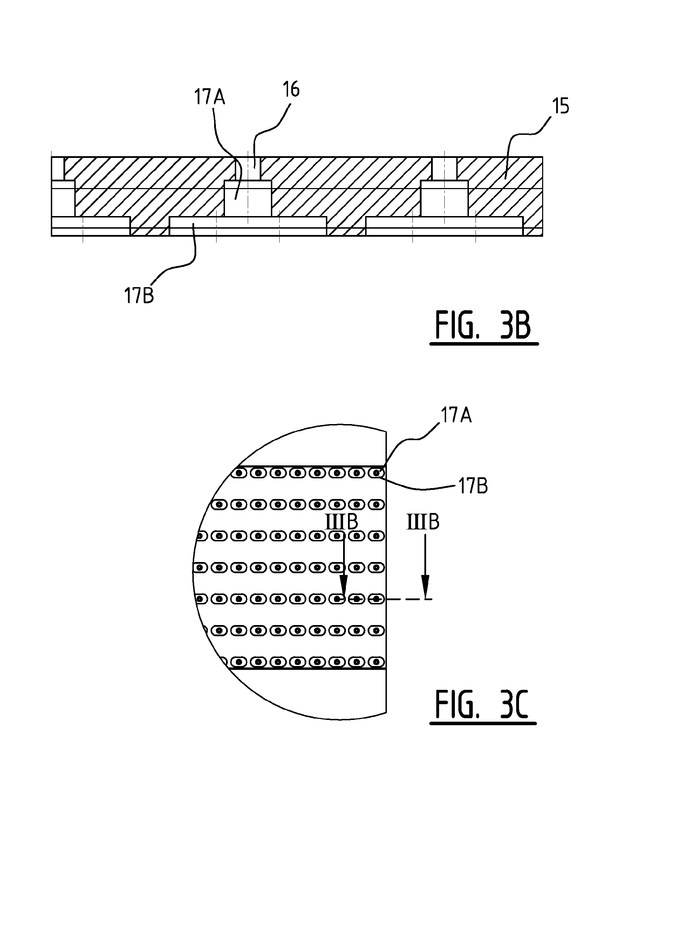

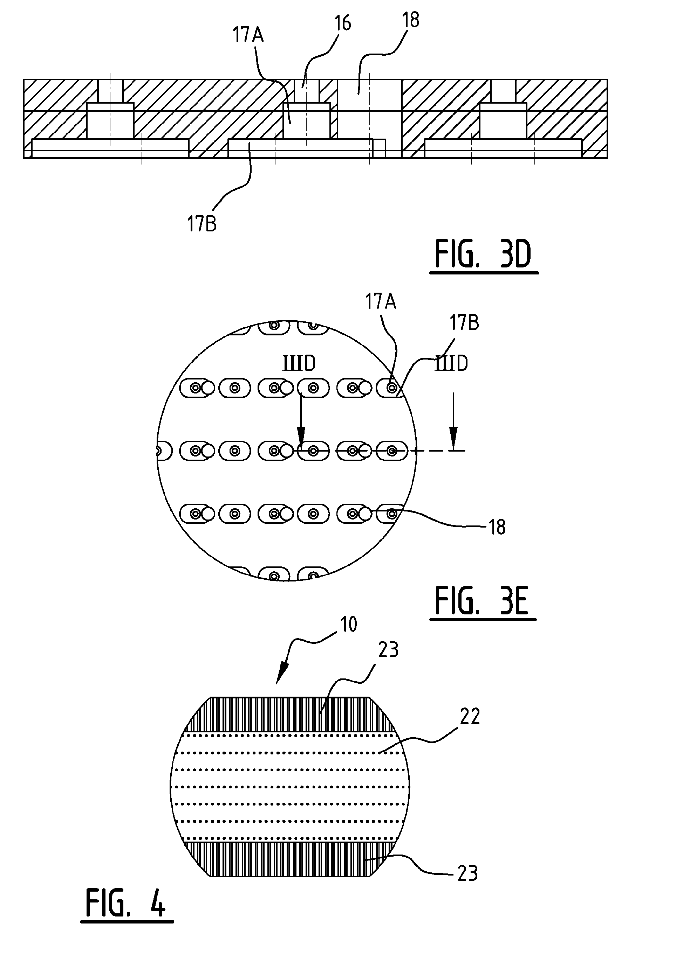

On the bottom side of primary vacuum chamber 12, a guiding plate 15 is mounted, which is shown in more detail in figures 3A-3C. In the bottom view of guiding plate 15 illustrated in figure 3A, corresponding to the side of guiding plate 15 that contacts conveyor belt 10, a plurality of rows of openings can be seen. The cross sectional view of guiding plate 15 shown in figure 3B illustrates that guiding plate 15 comprises a throttle opening 16 having a diameter of roughly 1.6 mm and a pair of openings 17A, 17B which together form a secondary vacuum chamber. Opening 17B is an elongated opening that extends over roughly 10 mm in the direction of movement of conveyor belt 10. These openings are arranged with a predefined pitch in the direction of movement of conveyor belt 10 to form a row of openings. Typically the distance between consecutive openings 17B is about 2.5 mm. Guiding plate 15 comprises a plurality of these rows, which are all parallel to each other.

Opening 17A provides a transition between elongated opening 17B and throttle opening 16. In other embodiments a tapered opening 17B is formed that extends from one side of guiding plate 15 to throttle opening 16.

Not every elongated opening is the same. At predefined intervals a so called rejection hole is formed, which is illustrated in figures 3D-3E. At these intervals, a separate channel 18 is formed that extends from one side of guiding plate 15 to opening 17B of the secondary vacuum chamber. As will be elucidated later, pressurized fluid, e.g. air or nitrogen, can be injected through channel 18 into opening 17B to thereby quickly increase the pressure in opening 17B.

Guiding plate 15 comprises a first part 19 and a second part 20 that protrudes with respect to first part 19, see figure 3A. Openings 17A, 17B are all arranged in second part 20, which is used not only for the generation of under pressure but also to guide conveyor belt 10 in a manner similar to protrusion 8. More in particular, the height difference between first part 19 and second part 20 corresponds to the height of protrusion 8. In addition, separate guiding structures 21 are used to guide conveyor belt 10 to move along and in close vicinity and/or contact with guiding plate 15, see figure 2.

Figure 4 illustrates a top view of a part of conveyor belt 10. The side shown comes into contact with guiding plate 15 during operation. Conveyor belt 10 is embodied as an endless belt and is provided with a plurality of through openings 22 having a diameter of about 1.6 mm. These openings are arranged at a predefined pitch of 7 mm to form a row of openings 22. Conveyor belt 10 comprises a plurality of rows of openings 22, which are all parallel to each other. Each elongated opening 17B covers at least one through opening 22 at a time. Hence, sufficient suction power is available to suck and hold the container(s) against conveyor belt 10.

Conveyor belt 10 comprises toothing structures 23 that correspond to complementary structures on rollers/wheels 3, 4. This allows conveyor belt 10 to be transported along vacuum unit 6 without slippage. Openings 22 are arranged in a recessed part relative to toothing structures 23. The height difference between toothing structures 23 and the recessed part matches the height of protrusion 8 and the height difference between parts 19, 20.

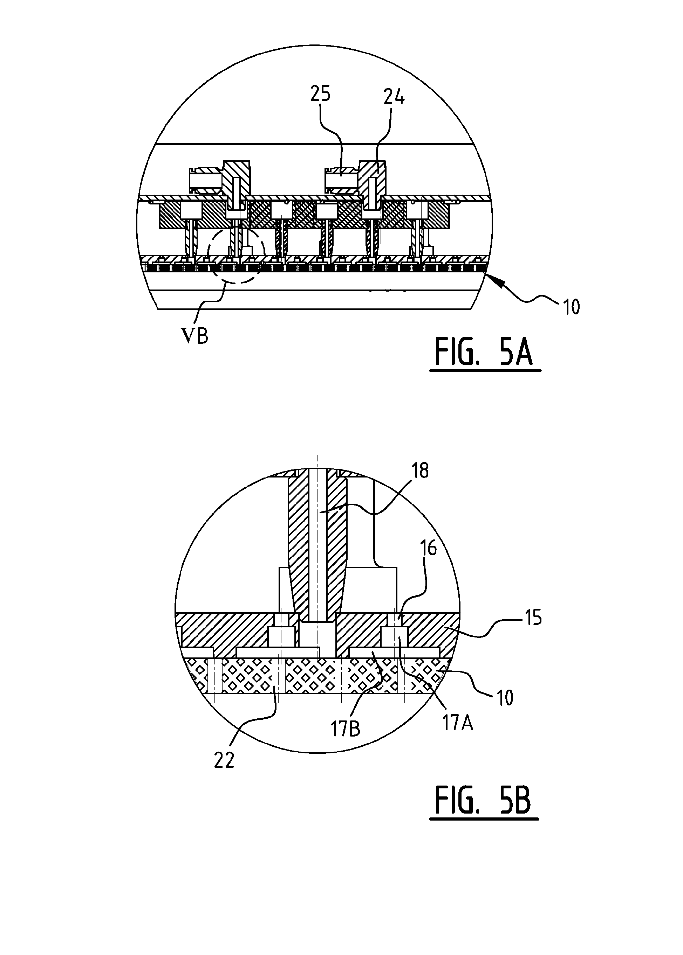

Figures 5A and 5B illustrate cross sections of the vacuum unit in figure 1, wherein conveyor belt 10 is mounted around rollers/wheels 3, 4. Rejection units 24 are shown that are in fluid communication with channels 18 each having a diameter of roughly 4 mm. Each rejecting unit 24 is connected to a source of pressurized fluid, such as compressed air, via inlet 25 and can be controlled to allow the pressurized fluid to be injected into opening 17B of the secondary vacuum chamber thereby quickly increasing the pressure in the secondary vacuum chamber. To this end, rejecting unit 24 may comprise a controllable valve.

As can be seen in figure 5B, the pitch of through openings 22 in conveyor belt 10 is smaller than the length of elongated opening 17B in the direction of movement. In addition, the pitch of elongated openings 17B is larger than the pitch of through openings 22. Consequently, at least one through opening 22 is covered by elongated opening 17B during operation.

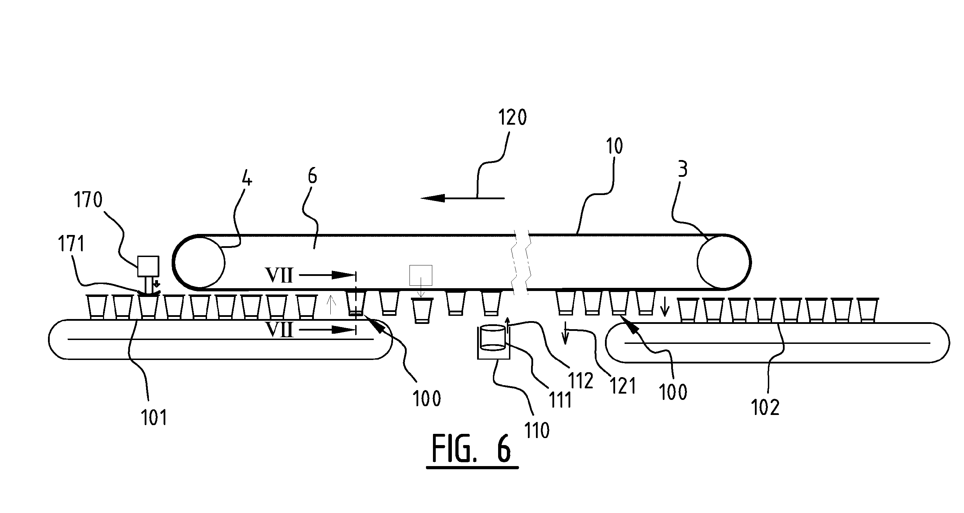

Figure 6 illustrates an embodiment of a sleeving system according to the invention which uses the transport system of figures 1-5. Here, the system is used to transport containers 100 from a first position, for instance an end part of a first conveyor belt 101, to a second position, for instance a begin part of a second conveyor belt 102. A sleeving device 110 is arranged below conveyor belt 10 to allow a sleeve 111, or another type of label, to be placed on container 100 in the direction indicated by arrow 112. A control unit (not shown) is provided that controls the operation of drive roller/wheel 3, vacuum unit 6, and sleeving device 110. The operation of the system depicted in figure 6 will be described next.

Containers 100 are supplied using first conveyor belt 101, preferably in a continuous manner. At the same time, conveyor belt 10 is rotating around rollers/wheels 3, 4 in a direction indicated by arrow 120, also preferably in a continuous manner. Referring to figures 5A and 5B, and assuming that no containers 100 are carried by conveyor belt 10 at this time, conveyor belt 10 is sucked against guiding plate 15 due to the under pressure that is generated in openings 17A and 17B. More in particular, surrounding air from below conveyor belt 10 will be evacuated by the vacuum pump consecutively via through openings 22, openings 17B, openings 17B, throttle openings 16, primary vacuum chamber, and vacuum pipe 9. Any air in between conveyor belt 10 and guiding plate 15 will be evacuated as well. Consequently, conveyor belt 10 abuts guiding plate 15 and therefore slides along vacuum unit 6 during operation. At this time, rejection units 24 are not activated.

Last container 100 on first conveyor belt 101 is sucked towards conveyor belt 10 due to the under pressure generated above this container, which is a result of the air flow through those openings 22 directly above this container that are covered by an elongated opening 17B. Once container 100 is sucked against conveyor belt 10, thereby essentially closing one or more through openings 22, the pressure inside the secondary vacuum chamber momentarily associated with those through openings 22 will drop as leakage from the outside air is reduced by the shielding of container 100.

Due to the fact that the internal volume of primary vacuum chamber 12 is much larger than the accumulated internal volume of the plurality of secondary vacuum chambers, and because the diameter of throttle opening 16 is small in view of the pumping capacity of the vacuum pump, the pressure inside primary vacuum chamber 12 can be considered constant. On the other hand, the size of the secondary vacuum chamber, and more in particular that of opening 17B, is relatively large compared to the diameter of throttle opening 16. Due to this relatively large area, enough force can be built up such that conveyor belt 10 is properly contacting guiding plate 15 without leaving too much space therein between that could result in leakage. Such leakage would increase the effective pressure inside opening 17B and would limit the suction force that can be exerted onto container 100, both when such container 100 is still on the first conveyor belt 101 and when this container is already sucked against conveyor belt 10. The large size of opening 17B in the direction of movement of conveyor belt 10 allows sufficient through openings 22 to be covered. Ideally, through openings 22 that are not covered by elongated opening 17B should lay against guiding plate 15, more in particular the area of guiding plate 15 in between elongated openings 17B, in such a manner that these openings are essentially closed and cannot introduce any leakage.

Once container 100 is picked up, it is transported by conveyor belt 10 along vacuum unit 6 as indicated by arrow 120. At a given moment in time, a new container 100 may be sucked against conveyor belt 10 from first conveyor belt 101. This process does not or hardly influence the process of holding an already suspended container 100 against conveyor belt 10. This is due to the fact that the secondary vacuum chambers are not directly in contact to each other, only via throttle openings 16.

Downstream of first conveyor belt 101, a sleeving device 110 is positioned that places a sleeve 111 around container 100. Other types of labels, such as stickers, may additionally or alternatively be placed. In figure 6, a sleeve is slid over container 100. This is facilitated by the tapering shape of container 100. Sleeve 111 may be a heat-shrinkable sleeve which can be permanently fixed to container 100 by applying heat. To that end, containers 100 may be led through a heating tunnel (not shown). It is contemplated that the system in figure 6 may be partially arranged in such heating tunnel. Alternatively, containers 100 are led into a heating tunnel once these containers are placed on the second conveyor belt 102. Prior to sleeving container 100 with a heat-shrinkable sleeve by sleeving device 110, moisture can be applied to container 100 or sleeve 111 to allow a temporary fixation of sleeve 111 onto container 100. This is particularly advantage if sleeve 111 does not extend over the full length of container 100. Other types of sleeves or labels may be used that may require other techniques to attach them to the container, such as gluing.

It may be desirable to reject a container 100 that is held against conveyor belt 10. For instance, the container may not be properly held against conveyor belt 10, the contents of container 100 may be contaminated, container 100 may be damaged, a sleeve 111 may not be present, or the quality of the contents of container 100 may be unacceptable. To that end, rejection units 24 may be individually controlled to increase the pressure in the secondary vacuum chambers to which they are connected. Typically, the width of a container 100 is such that container 100 is held against conveyor belt 10 thereby covering a plurality of through openings 22 in the direction of movement of conveyor belt 10. The vacuum generated in the secondary vacuum chambers, which is the same as the vacuum in the through openings 22 covered by the container, results in a net upward force that is larger than the force of gravity acting on container 100. The purpose of the rejecting units 24 is to disrupt this balance. This may be achieved by creating an over pressure in the secondary vacuum chamber with respect to the ambient pressure or to only increase the pressure in the secondary vacuum chamber such that the force of gravity is larger than the net upward force. In the direction of movement of conveyor belt 10, not every secondary vacuum chamber is connected to a rejecting unit 24. For instance, one in six chambers is connected to a rejecting unit 24.

Once rejecting unit 24 is activated, container 100, which is held against conveyor belt 10 at the position of the secondary vacuum chamber corresponding to the activated rejecting unit 24, will drop in the direction indicated by arrow 121. These rejected containers can be disposed or recycled.

One or more sensors may be arranged along the vacuum unit to sense one or more parameters of the container or the contents therein. Based on these measurements, which are fed to the control unit, rejection units 24 may be activated to reject those containers 100 which are unacceptable.

If containers 100 reach the end of vacuum unit 6, they will drop onto second conveyor belt 102 due to the absence of a vacuum. Conveyor belt 102 transports containers 100 for further processing, for instance towards a heating tunnel.

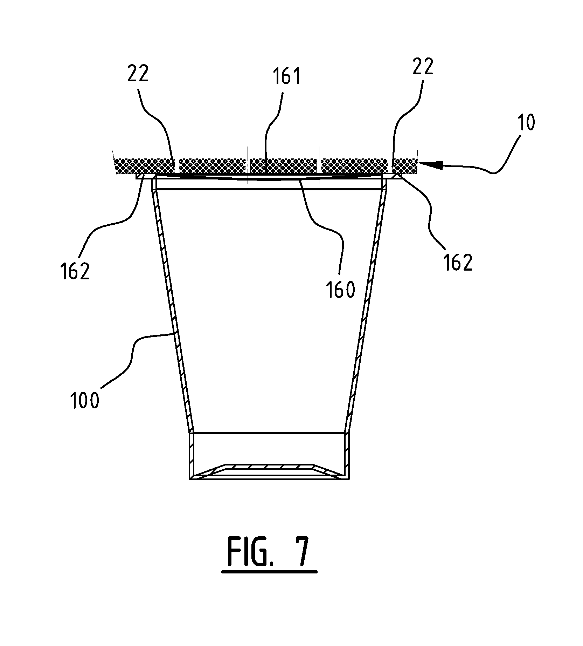

Figure 7 illustrates an advantageous shape of a container. In order for containers 100 to be properly held against conveyor belt 10, it is advantageous if the shape of containers 100, and more in particular a top side 160 thereof, concaves downwardly. This allows a closed space 161 to be formed in between conveyor belt 10 and top side 160 of container 100 which can be evacuated by the vacuum pump. Here, edges 162 of container 100 lay against conveyor belt 10 to effectively seal space 161.

To achieve a downwardly concaving top side 160, containers 100 may be shaped appropriately. In most case, top side 160 of container 100 comprises a seal that seals the inside of container 100 which may comprise foodstuff or a beverage. Such a seal can be shaped prior to the transportation of containers 100 by conveyor belt 10. For instance, a punching device 170 may be provided that shapes a seal of a container 100 by making a depression in the seal using for instance a punching rod 171, see figure 6.

It should be appreciated by the skilled person that various modifications are possible in the embodiments shown above without departing from the scope of the present invention as defined by the appended claims and their equivalents.

## Claims

1. A system for sleeving a sleeve and/or label around a container, comprising:
a sleeving device for arranging a sleeve and/or label around the container;
a transport system for transporting the container, said transport system comprising a conveyor having a movable conveyor belt;
**characterized in that**
the conveyor belt is provided with a plurality of through openings, and **in that**
the transport system further comprises a stationary vacuum unit configured to apply a vacuum to at least one of said through openings as the conveyor belt moves along the vacuum unit, wherein the vacuum unit comprises:
a primary vacuum chamber;
a plurality of secondary vacuum chambers, which during operation, are each configured to abut the movable conveyor belt and which each have an opening elongated in a direction of movement of the conveyor belt to essentially cover at least one through opening in the vacuum conveyor belt in order to hold or suck the container against the moving conveyor belt, wherein the primary vacuum chamber has a larger internal volume than the accumulated volume of the plurality of secondary vacuum chambers, each secondary vacuum chamber comprising throttle opening between the internal volume of the primary vacuum chamber and that secondary vacuum chamber to apply the vacuum in the primary vacuum chamber to that secondary vacuum chamber, wherein a size of the throttle opening is substantially less than a length of each elongated opening in the direction of movement.

2. The system as claimed in claim 1, wherein the throttle opening has a diameter and/or characteristic size between 1.4 mm and 1.8 mm, preferably a diameter of about 1.6 mm.

3. The system as claimed in any of the preceding claims, the transport system further comprising a rejection unit configured to remove a container from the movable vacuum conveyor belt, the rejection unit comprising a conduit for selectively supplying fluid to at least one of said plurality of secondary vacuum chambers in order to at least partly eliminate the vacuum therein.

4. The system as claimed in claim 3, the transport system further comprising a control unit configured to activate the rejection unit to supply fluid to the secondary vacuum chamber(s) associated with the selected conduit.

5. The system as claimed in claim 3 or 4, wherein the conduit exits in the at least one of said plurality of secondary vacuum chambers.

6. The system according to any of the claims 3-5, the transport system further comprising a support element for supporting the conduits above or below the at least one of said plurality of secondary vacuum chambers, wherein the support element is configured to allow lateral and/or longitudinal displacement of the conduit in order to position the conduit above or below the at least one of said plurality of secondary vacuum chambers.

7. The system according to any of the claims 3-6, wherein the fluid supplied by the rejection unit comprises a gaseous medium, preferably a compressed gaseous medium, such as compressed air.

8. The system as claimed in any of the previous claims, the transport system further comprising a guiding member to guide the movement of the conveyor belt, said guiding member comprising said plurality of secondary vacuum chambers, each secondary vacuum chamber being in fluid communication with said primary vacuum chamber, wherein, during operation, the conveyor belt preferably abuts the guiding plate and/or wherein the vacuum unit preferably comprises a box member, wherein the guiding member is fixedly connected to the box member to define the primary vacuum chamber, and wherein the guiding member preferably has a plate shape.

9. The system as claimed in any of the previous claims, wherein the length of each elongated opening in the direction of movement is 5 to 10 times larger than a diameter and/or characteristic size of the throttle opening, wherein the length of each elongated opening in the direction of movement is preferably in the range of 7 to 18 mm, preferably about 10 mm.

10. The system as claimed in any of the previous claims, wherein a diameter and/or characteristic size of the throttle opening is substantially identical to a diameter and/or characteristic size of the through openings in the conveyor belt and/or wherein a length of the elongated opening in the direction of movement of the conveyor belt is larger than a pitch between consecutive through openings in the conveyor belt and/or a pitch between consecutive through openings in the conveyor belt is smaller than a width of the container, and/or a distance between a trailing end of a first secondary vacuum chamber and a leading end of a second secondary chamber is smaller than a pitch between consecutive through openings in the conveyor belt and/or a size of the elongated openings in a direction transverse to the direction of movement of the conveyor belt is larger than a size of the through openings in the conveyor belt in said transverse direction and/or the volume of the primary vacuum chamber is at least 5 times, preferably at least 10 times, more preferably at least 20 times as large as the accumulated volume of the plurality of secondary vacuum chambers.

11. The system as claimed in any of the previous claims, wherein during operation, the container is essentially suspended from the conveyor belt.

12. The system as claimed in any of the previous claims, wherein the conveyor belt is an endless conveyor belt that is mounted in a loop around a pair of spaced apart wheels or rollers, wherein the wheels or rollers are configured to drive and guide the conveyor belt and wherein the vacuum unit is disposed in the loop and in between the wheels or rollers.

13. The system as claimed in any of the preceding claims, wherein the sleeving device is configured for arranging heat-shrinkable sleeves around the containers transported by the conveyor.

14. The system as claimed in any of the preceding claims, wherein the vacuum conveyor belt comprises multiple rows of through openings in the vacuum conveyor belt, which rows are arranged in parallel.

15. The system as claimed in any of the previous claims, the transport system further comprising a vacuum pump that is connected to the primary vacuum chamber.
